# EUROPÄISCHE PATENTSCHRIFT

(11) **EP 1 602 163 B1**
(45) Veröffentlichungstag und Bekanntmachung des Hinweises auf die Patenterteilung: **03.12.2014**
(21) Anmeldenummer: 03708219.5
(22) Anmeldetag: 12.03.2003
(51) Int. Cl.: H02J 15/00, G01D 21/00

(54) **ANORDNUNG UND VERFAHREN ZUR DRAHTLOSEN VERSORGUNG EINES FELDGERÄTES IN EINER VERFAHRENSTECHNISCHEN ANLAGE MIT ELEKTRISCHER ENERGIE**
ARRANGEMENT AND METHOD FOR CONTINUOUSLY SUPPLYING ELECTRIC POWER TO A FIELD DEVICE IN A TECHNICAL SYSTEM
ENSEMBLE ET PROCEDE POUR L'ALIMENTATION EN ENERGIE ELECTRIQUE SANS FIL D'UN APPAREIL DE TERRAIN DANS UNE INSTALLATION INDUSTRIELLE

(43) Veröffentlichungstag der Anmeldung: 07.12.2005
(73) Patentinhaber: ABB Research Ltd., 8050 Zürich (CH)
(72) Erfinder: SCHEIBLE, Guntram, 69517 Gorxheimertal (DE); KEUL, Thomas, 63579 Freigericht (DE); MERTE, Rolf, 79117 Freiburg (DE); OVERHOFF, Dietmar, 63768 Hösbach (DE); DECKMANN, Heinrich, 63505 Langenselbold (DE); HUCK, Ralf, 63538 Großkrotzenburg (DE)
(74) Vertreter: Marks, Frank
(86) Internationale Anmeldenummer: PCT/EP2003/002529
(87) Internationale Veröffentlichungsnummer: WO 2004/082099

(56) Entgegenhaltungen:
- DE-U- 20 107 112

## Beschreibung

Die Erfindung betrifft eine Anordnung zur drahtlosen Versorgung eines Feldgerätes in einer verfahrenstechnischen Anlage, das mit einer drahtlosen Kommunikationsschnittstelle ausgestattet ist, mit elektrischer Energie, gemäß dem Oberbegriff des Anspruchs 1. Die Erfindung betrifft ferner ein Verfahren zur drahtlosen Versorgung eines Feldgerätes in einer verfahrenstechnischen Anlage mit elektrischer Energie gemäß dem Oberbegriff des Anspruchs 6.

Es sind Feldgeräte, die mit einer drahtlosen Kommunikationsschnittstelle, beispielsweise einer GPRS-, Bluetooth- oder einer anderen energiesparsamen Schnittstelle wie ZigBee, ausgestattet sind, zur Anwendung in verfahrenstechnischen Anlagen bekannt, wobei solche Geräte neben einer Sensor/Aktoreinheit, welche den eigentlichen Mess- oder Stellmodul, einen Steuerungs-, Datenerfassungs- und Verarbeitungsmodul und auch die drahtlose Kommunikationsschnittstelle umfasst, noch eine Energieerzeugungs- und Bereitstellungseinheit zur drahtlosen Energieversorgung des Feldgerätes innerhalb eines Gehäuses umfassen. Besonders vorteilhaft erscheint dabei eine Variante einer Energieerzeugungs- und Bereitstellungseinheit, durch die prozessual in der verfahrenstechnischen Anlage vorhandene, nichtelektrische Primärenergie in elektrische Energie umgesetzt und das Feldgerät auf diese Weise mit elektrischer Energie versorgt wird, da man auf diese Weise den Nachteil der Erschöpflichkeit konventioneller Primärenergiequellen, wie z.B. Batterien, vermeidet. In der DE 101 20 100 A1 wurde ein solches System vorgeschlagen, das sich zur Versorgung von Feldgeräten mit drahtloser Kommunikationseinrichtung zur Verwendung in verfahrenstechnischen Anlagen sogenannter nichtkonventioneller Primärenergieerzeuger bedient, beispielsweise eines thermoelektrischen Wandlers, mit dem eine Temperaturdifferenz zwischen zwei Medien unterschiedlicher Temperatur in einen elektrischen Strom umgesetzt wird. In der DE 201 07 112 U1 wird eine Einrichtung zur Energieversorgung von Feldgeräten in verfahrenstechnischen Anlagen, die mit einer drahtlosen Kommunikationsschnittstelle zum Datenaustausch mit einer zentralen Einrichtung ausgestattet sind, beschrieben, bei der das Feldgerät mit einem thermoelektrischen Wandler ausgestattet ist, mit dem die physikalische Größe Temperaturdifferenz zwischen zwei Medien verschiedener Temperatur in einen elektrischen Strom umgewandelt wird. Der thermoelektrische Wandler in der Einrichtung gemäß der DE 201 07 112 U1 wird dabei aus einem Thermoelement zwischen zwei Fühlstellen gebildet, wobei die erste Fühlstelle durch die Wand der Rohrleitung des verfahrenstechnischen Prozesses in das Prozessmedium hineinragt und die zweite Fühlstelle innerhalb oder außerhalb des Feldgerätes sich jeweils auf Umgebungstemperaturniveau befindet. Bei einer solchen Anordnung besteht allerdings die Schwierigkeit, dass die in das Prozessmedium hineinragende erste Fühlstelle des thermoelektrischen Wandlers besonders geschützt werden muß gegen Korrosion und Verunreinigung, wodurch insbesondere der Wärmeübergang von dem Medium auf die Fühlstelle und damit die Effizienz des thermoelektrischen Wandlers sich im Laufe der Zeit verschlechtern würde. Weiterhin stellt es einen erheblichen konstruktiven Aufwand dar, den thermoelektrischen Wandler mit seiner einen Fühlstellenseite in Innere des Prozessmediums zu bringen; auch gibt es etliche Einsatzstellen von Feldgeräten in verfahrenstechnischen Anlagen, bei denen ein direktes Eintauchen eines Bauteiles in das Prozessmedium aus anlagentechnischen Gründen gar nicht möglich ist. Außerdem ist die Effizienz eines thermoelektrischen Wandlers, der die Temperaturdifferenz zwischen zwei Medien unterschiedlicher Temperaturen ausnutzt, naturgemäß beschränkt. Somit wird die Einsatzmöglichkeit einer Energieversorgungseinrichtung gemäß der DE 201 07 112 U1 in der Praxis stark eingeschränkt.

Es ist daher die Aufgabe der vorliegenden Erfindung, eine Anordnung zur drahtlosen Versorgung eines Feldgerätes in einer verfahrenstechnischen Anlage, das mit einer drahtlosen Kommunikationsschnittstelle ausgestattet ist, unter Verwendung eines thermoelektrischen Wandlers zu schaffen, welche die Nachteile der bekannten Anordnungen vermeidet, sowie ein Verfahren zur drahtlosen Versorgung eines Feldgerätes in einer verfahrenstechnischen Anlage, das mit einer drahtlosen Kommunikationsschnittstelle ausgestattet ist, mit elektrischer Energie zu entwickeln.

Die Aufgabe wird hinsichtlich der Anordnung gelöst durch die kennzeichnenden Merkmale des Anspruches 1 und bezüglich des Verfahrens durch die kennzeichnenden Merkmale des Anspruchs 6.

Erfindungsgemäß also ist der thermoelektrische Wandler außerhalb der prozessmedienführenden Rohrleitungen so in oder an dem Feldgerät angeordnet, dass der Wärmestrom in dem Feldgerät zwischen der prozesszugewandten Feldgeräteseite und der prozessabgewandten Feldgeräteseite und/oder der Wärmestrom durch den thermoelektrischen Wandler zwischen der prozesszugewandten Wandlerseite und der prozessabgewandten Wandlerseite durch den thermoelektrischen Wandler in elektrische Energie umwandelbar ist.

Der Vorteil einer solchen erfindungsgemäßen Einrichtung besteht darin, dass eine Verunreinigung oder Korrosion des thermoelektrischen Wandlers weitgehend vermieden wird, und außerdem durch die Ausnutzung des Wärmestroms, d.h. der flächenbezogenen Leistung, ausgedrückt in W/m², eine wesentlich höhere Effizienz des thermoelektrischen Wandlers erreichbar ist. Dabei sind thermoelektrische Wandler, die den durch sie hindurchgehenden Wärmestrom zur Erzeugung elektrischer Energie ausnutzen, im Prinzip bekannt, allerdings wurde bisher ihre Verwendbarkeit im Zusammenhang mit Feldgeräten in verfahrenstechnischen Anlagen, die mit einer drahtlosen Kommunikationsschnittstelle ausgestattet sind, von der Fachwelt verneint. Wie sich nun überraschend gezeigt hat, lassen sie sich sehr wohl und in vorteilhafter Weise zur Erzeugung von elektrischer Energie für Feldgeräte in verfahrenstechnischen Anlagen nutzen, und zwar für alle Arten von Feldgeräten, von Temperaturfühlern über Durchflussmesser bis zu Analysegeräten wie beispielsweise pH-Messgeräten oder Leitfähigkeitsmessern.

In einer besonders vorteilhaften Ausgestaltungsform der Erfindung ist der Wärmestrom in dem Feldgerät zwischen der prozesszugewandten Feldgeräteseite und der prozessabgewandten Feldgeräteseite und/oder der Wärmestrom durch den thermoelektrischen Wandler zwischen der prozesszugewandten Wandlerseite und der prozessabgewandten Wandlerseite unabhängig von der Richtung des Wärmestromes in elektrische Energie umwandelbar. Damit wird erreicht, dass auch in Fällen, in denen - beispielsweise wenn das Prozessmedium stark gekühlt wird - die Prozessmedientemperatur unter die Umgebungstemperatur sinkt, der thermoelektrische Wandler weiterhin elektrische Energie erzeugt und somit eine unterbrechungsfreie Stromversorgung des Feldgerätes gewährleistet ist.

Es ist sehr vorteilhaft, wenn der thermoelektrische Wandler auf der prozessabgewandten Wandlerseite mit einem Kühlkörper verbunden ist. Dadurch wird auf einfache Weise ein definierter, guter Pfad für den Wärmestrom geschaffen.

Eine weitere vorteilhafte Ausgestaltungsmöglichkeit der Erfindung sieht vor, dass der thermoelektrische Wandler ganz und der Kühlkörper wenigstens teilweise innerhalb des Gehäuses des Feldgerätes angebracht sind bzw. einen Teil des Gehäuses darstellen, denn dann ist ein besonders kompakter und modularer Aufbau aus wenigen Komponenten gewährleistet.

Sehr vorteilhaft ist auch eine Ausgestaltungsform, bei der das Feldgerät mit einem Energiespeicher und einem Energiemanagementsystem ausgestattet ist, welches im Controller oder in dem Steuerungs-, Datenerfassungs- und Verarbeitungsmodul integriert ist. Mit dem Energiemanagementsystem ist der insgesamte Energieverbrauch des Feldgerätes minimierbar. Das Energiemanagementsystem kann dabei über die drahtlose Kommunikationsschnittstelle mit einer Leitstelle oder auch mit einer zentralen Leit- und/oder Servicestelle verbunden sein. Wird beispielsweise keine oder eine nur sehr geringe thermoelektrische Spannung festgestellt, so kann das daran liegen, dass gerade kein Prozessmedium vorhanden ist. Die Leitstelle oder zentrale Servicestelle kann das anhand der Messwerte anderer Feldgeräte feststellen. Im Falle einer Bestätigung könnte das Feldgerät durch die Leitstelle in einen Zustand reduzierter Aktivität und somit reduzierten Energieverbrauchs versetzt werden, so lange, bis erneut das Vorhandensein von Prozessmedium erkannt wird.

Prinzipiell kommen die oben genannten Vorteile bei allen Arten von Feldgeräten zum Tragen, insbesondere aber bei Feldgeräten mit einem gesamten Leistungsbedarf von einigen Milliwatt. Insbesondere sind dies Temperaturfühler- und Transmitter, bei denen bereits aufgrund ihres Einsatzortes in dem verfahrenstechnischen Prozess, welcher in der Regel ein Prozesspunkt mit einer gegenüber der Umgebung erhöhten Temperatur ist, ein großer Wärmefluss durch das Feldgerät oder durch den thermoelektrischen Wandler zumindest teilweise gewährleistet ist.

Hinsichtlich des Verfahrens zur drahtlosen Versorgung eines Feldgerätes in einer verfahrenstechnischen Anlage, das mit einer drahtlosen Kommunikationsschnittstelle ausgestattet ist, mit elektrischer Energie besteht der Kern der Erfindung darin, dass der thermoelektrische Wandler außerhalb der prozessmedienführenden Rohrleitungen angeordnet wird, und dass der Wärmestrom in dem Feldgerät zwischen der prozesszugewandten Feldgeräteseite und der prozessabgewandten Feldgeräteseite und/oder der Wärmestrom durch den thermoelektrischen Wandler zwischen der prozesszugewandten Wandlerseite und der prozessabgewandten Wandlerseite durch den thermoelektrischen Wandler in elektrische Energie umgewandelt wird.

Dabei kann der Wärmestrom in dem Feldgerät zwischen der prozesszugewandten Feldgeräteseite und der prozessabgewandten Feldgeräteseite und/oder der Wärmestrom durch den thermoelektrischen Wandler zwischen der prozesszugewandten Wandlerseite und der prozessabgewandten Wandlerseite unabhängig von der Reichtung des Wärmestromes in elektrische Energie umgewandelt werden.

Eine vorteilhafte Ausgestaltung des Verfahrens besteht darin, dass mittels eines auf der prozessabgewandten Wandlerseite angebrachten Kühlkörpers ein definierter Pfad für den Wärmestrom in dem Feldgerät geschaffen wird.

Sehr vorteilhaft ist es ferner, wenn der Energieverbrauch des Feldgerätes mittels eines Energiemanagementsystems minimiert wird, wobei das Energiemanagementsystem im Controller oder in dem Steuerungs-, Datenerfassungs- und Verarbeitungsmodul integriert ist und über die drahtlose Kommunikationsschnittstelle mit einer zentralen Leit- und/oder Servicestelle verbunden ist. Insbesondere ist es vorteilhaft, wenn der Energieverbrauch des Feldgerätes in Abhängigkeit des Speicherzustandes und/oder der aktuellen Messgrößen und/oder deren zeitlicher Änderungsrate und/oder des der zentralen Leit- und/oder Servicestelle bekannten momentanen Anlagenzustandes minimiert wird.

Weitere vorteilhafte Ausgestaltungen und Verbesserungen der Erfindung sind den weiteren Unteransprüchen zu entnehmen.

Anhand der Zeichnungen, in der zwei Ausführungsbeispiele der Erfindung dargestellt sind, sollen die Erfindung sowie weitere vorteilhafte Ausgestaltungen und Verbesserungen und weitere Vorteile der Erfindung näher erläutert und beschrieben werden.

Es zeigen
- Fig. 1: eine schematische Darstellung einer ersten Ausführungsform der Erfindung, mit in dem Feldgerät integrierten thermoelektrischen Wandler und Kühlkörper, und
- Fig. 2: eine schematische Darstellung einer zweiten Ausführungsform der Erfindung.

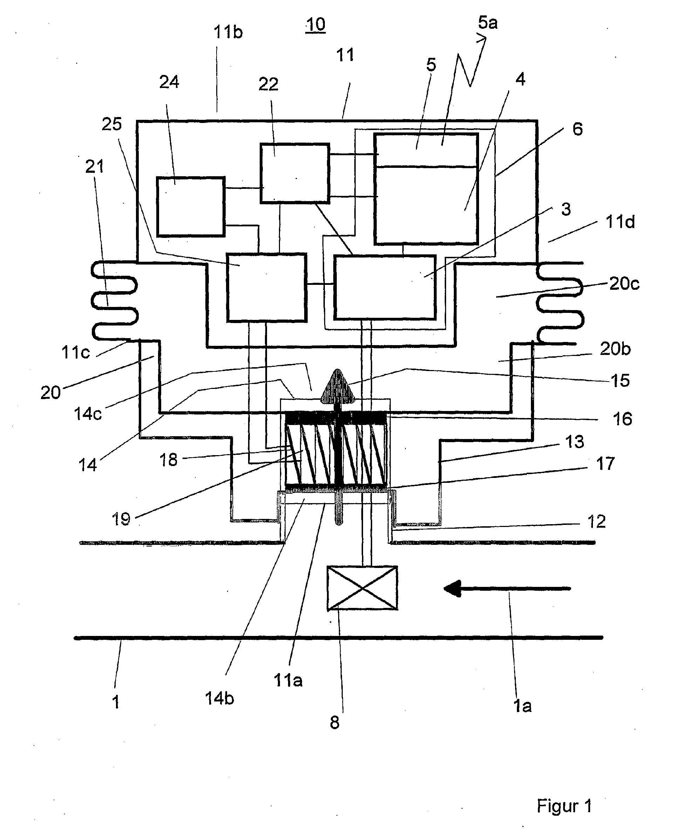

In Fig. 1 ist also eine erste Ausführungsform einer Anordnung zur drahtlosen Energieversorgung eines Feldgerätes 10, welches in dem hier gezeigten Beispiel ein Temperaturmessgerät zur Messung der Temperatur eines in einer Rohrleitung 1 eines verfahrenstechnischen Prozesses geführten und in der Fig. 1 durch einen Pfeil 1a dargestellten Prozessmediums ist, dargestellt. Das Feldgerät 10 ist umgeben von einem Gehäuse 11 und weist eine Sensor/Aktoreinheit 6, welche den eigentlichen Messmodul 3, einen Steuerungs-, Datenerfassungs- und Verarbeitungsmodul 4 und auch eine drahtlose Kommunikationsschnittstelle 5 umfasst. Der Messmodul 3 ist über eine Zwei- oder Vier-Drahtleitung mit einem Temperaturfühler 8 verbunden, welcher durch eine Öffnung in der Rohrleitung 1 in das Prozessmedium eintaucht. Das Feldgerät 10 ist über ein Verbindungsmittel 12, hier einen Rohrstutzen, mit der Rohrleitung 1 verbunden. Dadurch wird eine dem Prozess zugewandte Feldgeräteseite 11 a festgelegt, sowie weitere dem Prozess abgewandte Feldgeräteseiten 11 b, 11c, 11d.

An der prozesszugewandten Feldgeräteseite 11 a weist das Feldgerät 10 eine hohlzylinderförmige Anformung 13 auf, die in Art eines Kragens so an dem Feldgerät 10 angeordnet ist, dass sie von der prozesszugewandten Feldgeräteseite 11 a weg zu der Rohrleitung 1 hin orientiert ist. Diese hohlzylinderförmige Anformung 13 vermittelt die Verbindung mit dem Verbindungsmittel 12 und damit mit der Rohrleitung 1, und besteht bevorzugt aus thermisch schlecht leitfähigem Material, beispielsweise Kunststoff oder einem Kompositmaterial.

Axial im Inneren der hohlzylinderförmigen Anformung 13 ist ein thermoelektrischer Wandler 14 in Form einer Zylinderscheibe angebracht, deren äußerer Durchmesser dem inneren Durchmesser der hohlzylindrischen Anformung 13 entspricht und der in seiner axialen Erstreckungsrichtung teilweise ins Innere des Feldgerätes 10 hineinragt. Durch die Anordnung des thermoelektrischen Wandlers 14 innerhalb der hohlzylinderförmigen Anformung 13 wird an diesem eine prozesszugewandte Wandlerseite 14b und eine prozessabgewandte Wandlerseite 14c festgelegt. Die prozessabgewandte Wandlerseite wird auch als Umgebungsseite bezeichnet. An der prozesszugewandten Wandlerseite 14b ist der thermoelektrische Wandler 14 mit einem prozessseitigen Wärmeleitmittel 17 versehen, zur besseren thermischen Ankopplung an den verfahrenstechnischen Prozess. Entsprechend ist der thermoelektrische Wandler 14 an der prozessabgewandten Wandlerseite 14c mit einem umgebungsseitigen Wärmeleitmittel 16 versehen.

An der prozessabgewandten Wandlerseite 14c schließt an den Wandler 14, fest verbunden mit dessen umgebungsseitigem Wärmeleitmittel 16, ein Kühlkörper 20 an, der im Inneren des Feldgerätes 10 angeordnet ist. Der Kühlkörper 20 besteht im Wesentlichen aus einer Zylinderscheibe 20b, deren Außendurchmesser etwas geringer ist als der Innendurchmesser des Gehäuses 11, und einem auf dieser Zylinderscheibe 20b auf der dem Gehäuseinneren zugewandten Seite aufgesetztem hohlzylinderförmigen Ring 20c, der die Außenseite des Gehäuses 11 radial überragt. Die äußere Umfangsfläche des hohlzylinderförmigen Ringes 20c liegt somit außerhalb des Gehäuses 11 und weist eine mäanderartige Oberflächenkontur auf, so dass dadurch Kühlrippen 21 entstehen und die nach außen in die Umgebung gerichtete Oberfläche des Kühlkörpers 20 stark vergrößert ist. Der Kühlkörper 20 besteht insgesamt aus einem gut wärmeleitenden Material, beispielsweise Kupfer, Aluminium oder einer entsprechenden Metalllegierung, es könnte aber auch eine gut wärmeleitende Keramik sein. Über den so gestalteten Kühlkörper 20 in Verbindung mit dem umgebungsseitigen Wärmeleitmittel 16 ist also eine sehr gute wärmetechnische Anbindung der prozessabgewandten Wandlerseite 14c an die Umgebung des Feldgerätes gewährleistet. Unter der Annahme, dass die Temperatur des Prozessmediums 1a höher liegt als die Umgebungstemperatur, stellt sich folglich ein Wärmestrom ein, der in der Figur 1 durch den Pfeil 15 symbolisiert ist, und der, von dem prozessseitigen Wärmeleitmittel 17 ausgehend, den thermoelektrischen Wandler 14 durchdringt und über das umgebungsseitige Wärmeleitmittel 16 und den Kühlkörper 20 geleitet wird, so dass der Wärmestrom 15 insgesamt betrachtet in dem Feldgerät 10 zwischen der prozesszugewandten Feldgeräteseite 11 a und der prozessabgewandten Feldgeräteseite 11c, 11d, verläuft.

Durch den thermoelektrischen Wandler 14 wird der Wärmestrom in an sich bekannter Weise in elektrische Energie umgewandelt. Im Inneren des thermoelektrischen Wandlers sind dazu eine Anzahl von Thermoelementen in Reihe geschaltet, deren jedes aus einem Schenkel eines ersten Materials 18 und einem Schenkel eines zweiten Materials 19 besteht. Als erstes und zweites Material 18, 19, kommen alle Materialpaarungen in Frage, die den aus der Physik und dem Stand der Technik bekannten Seebeck-Effekt zeigen, beispielsweise Pt/PtRh, Ni/NiCr, Si/Ge, etc. Der Seebeck-Effekt selbst soll hier nicht weiter erläutert werden, es sei dazu auf einschlägige Physik-Lehrbücher verwiesen, beispielsweise auf Hering, Martin, Storer, Physik für Ingenieure, VDI Verlag Düsseldorf, 1992, S. 686ff. Das erste Material 18 und das zweite Material 19 sind an der prozesszugewandten Wandlerseite 14b, in gutem Wärmekontakt mit dem prozessseitigen Wärmeleitmittel 17 stehend, miteinander verbunden, beispielsweise verlötet. An der prozessabgewandten Wandlerseite sind die ersten und zweiten Materialien zweier benachbarter Thermoelemente miteinander verbunden, beispielsweise verlötet, in engem Wärmekontakt mit dem umgebungsseitigen Wärmeleitmittel. Auf diese Weise entsteht eine elektrische Reihenschaltung, aber eine wärmetechnische Parallelschaltung einer Vielzahl von Thermoelementen innerhalb des thermoelektrischen Wandlers.

Mittels zweier durch geeignete Durchführungen in dem Kühlkörper 20 von dem thermoelektrischen Wandler 14 in das Innere des Feldgerätes 10 verlaufenden Drähte wird die in dem thermoelektrischen Wandler 14 durch den Wärmestrom 15 erzeugte elektrische Spannung abgegriffen und über einen im Feldgerät 10 angeordneten Konvertergleichrichter 25 den weiteren Feldgerätekomponenten zugeführt. Es sind dies die Sensor/Aktoreinheit 6 mit dem darin integrierten Messmodul 3, dem Steuerungs-, Datenerfassungs- und Verarbeitungsmodul 4 und der drahtlosen Kommunikationsschnittstelle 5, sowie ein Controller 22 und ein Energiespeicher 24. In dem Energiespeicher 24 wird die im thermoelektrischen Wandler 14 erzeugte elektrische Energie gespeichert, um im Falle eines kurzfristigen Absinkens der Primärenergie-Zufuhr, also eines kurzfristigen Absinkens des Wärmestromes 15, genügend elektrische Energie zur Versorgung aller Funktionen des Feldgerätes 10 zur Verfügung stellen zu können. Der Controller 22 ist mit allen Baugruppen des Feldgerätes verbunden und steuert den inneren Ablauf von Messung, Datenübertragung, ggf. Konfigurierung des Feldgerätes über die drahtlose Kommunikationsschnittstelle 5, sowie das Energiemanagement des Feldgerätes 10. Durch den Pfeil 5a ist der drahtlose Daten- und/oder Signalaustausch des Feldgerätes 10 über die drahtlose Kommunikationsschnittstelle 5 mit einer außerhalb des Feldgerätes 10 liegenden, hier nicht dargestellten, zentralen Leit- und/oder Servicestelle symbolisiert, welche beispielsweise einzentraler Steuer- und Leitrechner sein kann.

Durch den Konvertergleichrichter 25 ist sichergestellt, dass das Feldgerät 10 auch in den Fällen mit elektrischer Energie versorgt ist, in denen der Wärmestrom durch den thermoelektrischen Wandler in umgekehrter Richtung verläuft, also in Richtung von der Umgebung hinein in den verfahrenstechnischen Prozess. Das kann z.B. dann der Fall sein, wenn der verfahrenstechnische Prozess eine starke Kühlung des Prozessmediums unter die Umgebungstemperatur erfordert, oder wenn bei gemäßigter Temperatur des Prozessmediums die Umgebungstemperatur stark ansteigt, beispielsweise durch Sonneneinstrahlung. Durch die hier dargestellte Ausführungsform der Erfindung kann das Feldgerät 10 also in sehr universeller Art mit elektrischer Energie versorgt werden. Um mit den niedrigen Spannungen des thermoelektrischen Wandlers arbeiten zu können, wird vorteilhafterweise ein an sich bekannter Synchrongleichrichter mit MOSFETs und nachfolgender Spannungserhöhung als Konvertergleichrichter verwendet. Eine andere denkbare Realisierung des Konvertergleichrichters verwendet zwei umgekehrt parallele Hochsetzsteller.

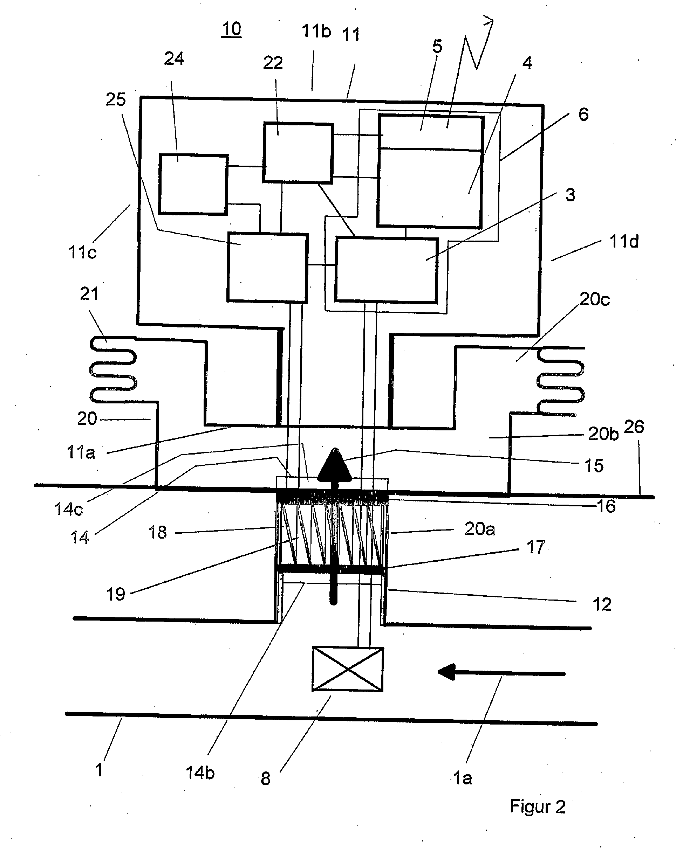

Figur 2 zeigt eine weitere Ausführungsform des Erfindungsgegenstandes. In der Ausführungsform nach Figur 2 ist der thermoelektrische Wandler 14 mit dem daran befestigten Kühlkörper 20 nicht innerhalb des Feldgerätes 10 angeordnet, sondern außerhalb, und zwar zwischen der Rohrleitung 1 und der prozesszugewandten Feldgeräteseite 11 a. Der innere Aufbau des Feldgerätes 10, der Aufbau des Kühlkörpers 20, der Aufbau des thermoelektrischen Wandlers 14 sowie der verfahrenstechnische Prozess sind in der Ausführungsform nach Figur 2 ansonsten gleich wie in der Ausführungsform nach Figur 1 beschrieben, gleiche Bezugszeichen bezeichnen gleichartige Komponenten. Es ist in der Ausführungsform nach Figur 2 zwischen der prozesszugewandten Seite des Kühlkörpers 20 und der Rohrleitung 1 zusätzlich noch eine als Hitzeschild 26 bezeichnete Abschirmung angebracht, die in Form einer Scheibe mit einem Außendurchmesser, der etwas größer als der Außendurchmesser des Kühlkörpers 20 ist, angebracht ist. Die Funktion des Hitzeschildes besteht darin, den Kühlkörper 20 und die Rohrleitung 1 wärmetechnisch voneinander abzuschirmen, insbesondere gegenüber einer gegenseitigen Beeinflussung aufgrund von Strahlung oder Konvektion, so dass der Temperaturunterschied zwischen der Umgebung und dem verfahrenstechnischen Prozess immer den größtmöglichen Wert aufweist und damit auch der Wärmestrom 15 durch den thermoelektrischen Wandler 14 maximal ist.

Ein weiterer Vorteil der Ausführungsform nach Figur 2 besteht in dem modularen Aufbau. Der Kühlkörper 20 mit dem Hitzeschild 26 und dem thermoelektrischen Wandler 14 bilden einen Energieversorgungsmodul, der unabhängig von dem eingesetzten Feldgerät 10 über ein Verbindungsmittel 12, hier einen Rohrstutzen, an den verfahrenstechnischen Prozess angeschlossen werden kann und der dann den Anschluss einer Reihen von unterschiedlichen Feldgeräten ermöglicht.

Die in den beiden Figuren 1 und 2 gezeigten Ausführungsbeispiele stellen nur einige der vielfach möglichen Realisierungsmöglichkeiten erfindungsgemäßer Einrichtungen dar. Alle denkbaren Arten von Feldgeräten sind mit erfindungsgemäßen Einrichtungen an alle denkbaren Arten von verfahrenstechnischen Prozessen oder Prozessabschnitten auf flexible Art und Weise anschließbar und ermöglichen dort eine langzeitsichere, drahtlose Versorgung der Feldgeräte mit elektrischer Energie.

### Bezugszeichenliste

- 1: Rohrleitung
- 1a: Prozessmedium
- 3: Messmodul
- 4: Steuerungs-, Datenerfassungs- und Verarbeitungsmodul
- 5a: Richtungspfeil
- 5: drahtlose Kommunikationsschnittstelle
- 6: Sensor/Aktoreinheit
- 8: Sensor
- 10: Feldgerät
- 11: Gehäuse
- 11a: prozesszugewandte Feldgeräteseite
- 11b: prozessabgewandte Feldgeräteseite
- 11c: prozessabgewandte Feldgeräteseite
- 11d: prozessabgewandte Feldgeräteseite
- 12: Verbindungsmittel
- 13: hohlzylinderförmige Anformung
- 14: Thermoelektrischer Wandler
- 14b: prozesszugewandte Wandlerseite
- 14c: prozessabgewandte Wandlerseite
- 15: Wärmestrom
- 16: umgebungsseitiges Wärmeleitmittel
- 17: prozessseitiges Wärmeleitmittel
- 18: erstes Material
- 19: zweites Material
- 20: Kühlkörper
- 20a: hohlzylinderförmige Anformung
- 20b: Zylinderscheibe
- 20c: kreiszylindrischer Ring
- 21: Kühlrippe
- 22: Controller
- 24: Energiespeicher
- 25: Konvertergleichrichter
- 26: Hitzeschild

## Patentansprüche

1. Anordnung zur drahtlosen Versorgung eines Feldgerätes (10) mit einem Gehäuse (11) zur Überwachung eines verfahrenstechnischen Prozesses in einer verfahrenstechnischen Anlage, in der prozessmedienführende Rohrleitungen vorhanden sind, das mit einer drahtlosen Kommunikationsschnittstelle (5) ausgestattet ist, mit elektrischer Energie, wobei das Feldgerät (10) wenigstens eine prozesszugewandte Feldgeräteseite (11a) und wenigstens eine prozessabgewandte Feldgeräteseite (11b, c, d) aufweist und mit einem thermoelektrischen Wandler (14) ausgestattet ist, der eine prozesszugewandte Wandlerseite (14b) und eine prozessabgewandte Wandlerseite (14c) aufweist, **dadurch gekennzeichnet, dass** der thermoelektrische Wandler (14) außerhalb der prozessmedienführenden Rohrleitung so in oder an dem Feldgerät (10) angeordnet ist, dass der Wärmestrom in dem Feldgerät (10) zwischen der prozesszugewandten Feldgeräteseite (11a) und der prozessabgewandten Feldgeräteseite (11 b, c, d), und/oder der Wärmestrom durch den thermoelektrischen Wandler (14) zwischen der prozesszugewandten Wandlerseite (14b) und der prozessabgewandten Wandlerseite (14c) durch den thermoelektrischen Wandler (14) in elektrische Energie umgewandelt wird.

2. Anordnung nach Anspruch 1, **dadurch gekennzeichnet, dass** der Wärmestrom in dem Feldgerät (10) zwischen der prozesszugewandten Feldgeräteseite (11a) und der prozessabgewandten Feldgeräteseite (11 b, c, d) und/oder der Wärmestrom durch den thermoelektrischen Wandler (14) zwischen der prozesszugewandten Wandlerseite (14b) und der prozessabgewandten Wandlerseite (14c) unabhängig von der Richtung des Wärmestromes in elektrische Energie umwandelbar ist.

3. Anordnung nach Anspruch 1 oder 2, **dadurch gekennzeichnet, dass** der thermoelektrische Wandler (14) auf der prozessabgewandten Wandlerseite (14c) mit einem Kühlkörper (20) verbunden ist.

4. Anordnung nach Anspruch 3, **dadurch gekennzeichnet, dass** der thermoelektrische Wandler (14) ganz und der Kühlkörper (14) wenigstens teilweise innerhalb des Gehäuses (11) angebracht sind.

5. Anordnung nach Anspruch 3, **dadurch gekennzeichnet, dass** das Feldgerät (10) mit einem Energiespeicher (24) und einem Energiemanagementsystem ausgestattet ist, welches im Controller (22) oder in dem Steuerungs-, Datenerfassungsund Verarbeitungsmodul (4) integriert ist.

6. Verfahren zur drahtlosen Versorgung eines Feldgerätes (10) mit einem Gehäuse (11) zur Überwachung eines verfahrenstechnischen Prozesses in einer verfahrenstechnischen Anlage, in der prozessmedienführende Rohrleitungen vorhanden sind, das mit einer drahtlosen Kommunikationsschnittstelle (5) ausgestattet ist, mit elektrischer Energie, wobei das Feldgerät (10) wenigstens eine prozesszugewandte Feldgeräteseite (11a) und wenigstens eine prozessabgewandte Feldgeräteseite (11b, c, d) aufweist und mit einem thermoelektrischen Wandler (14) ausgestattet ist, der eine prozesszugewandte Wandlerseite (14b) und eine prozessabgewandte Wandlerseite (14c) aufweist, **dadurch gekennzeichnet. dass** der Wärmestrom in dem Feldgerät (10) zwischen der prozesszugewandten Feldgeräteseite (11a) und der prozessabgewandten Feldgeräteseite (11 b, c, d) und/oder der Wärmestrom durch den thermoelektrischen Wandler (14) zwischen der prozesszugewandten Wandlerseite (14b) und der prozessabgewandten Wandlerseite (14c) durch den thermoelektrischen Wandler (14) in elektrische Energie umgewandelt wird.

7. Verfahren nach Anspruch 6, **dadurch gekennzeichnet, dass** der Wärmestrom in dem Feldgerät (10) zwischen'der prozesszugewandten Feldgeräteseite (11a) und der prozessabgewandten Feldgeräteseite (11 b, c, d) und/oder der Wärmestrom durch den thermoelektrischen Wandler (14) zwischen der prozesszugewandten Wandlerseite (14b) und der prozessabgewandten Wandlerseite (14c) unabhängig von der Richtung des Wärmestromes in elektrische Energie umgewandelt wird.

8. Verfahren nach Anspruch 7, **dadurch gekennzeichnet, dass** mittels eines auf der prozessabgewandten Wandlerseite (14c) angebrachten Kühlkörpers (20) ein definierter Pfad für den Wärmestrom in dem Feldgerät (10) geschaffen wird.

9. Verfahren nach Anspruch 8, **dadurch gekennzeichnet, dass** der Energieverbrauch des Feldgerätes (10) mittels eines Energiemanagementsystems minimiert wird, wobei das Energiemanagementsystem im Controller (22) oder in dem Steuerungs-, Datenerfassungs- und Verarbeitungsmodul (4) integriert ist und über die drahtlose Kommunikationsschnittstelle (5) mit einer zentralen Leit- und/oder Servicestelle verbunden ist.

10. Verfahren nach Anspruch 9, **dadurch gekennzeichnet, dass** der Energieverbrauch des Feldgerätes (10) in Abhängigkeit des Zustandes eines im Feldgerät angeordneten Energiespeichers (24) und/oder der aktuellen Messgrößen und/oder deren zeitlicher Änderungsrate und/oder des der zentralen Leit- und/oder Servicestelle bekannten momentanen Anlagenzustandes minimiert wird.

## Claims

1. Arrangement for supplying electrical power to a field device (10) with a housing (11) for monitoring a technical process in a process installation, in which there are pipelines which carry process media, without the use of wires, which field device (10) has a wire-free communication interface (5), has at least one field device face (11a) facing the process and at least one field device face (11b, c, d) facing away from the process, and is equipped with a thermoelectric transducer (14) which has a transducer face (14b) facing the process and a transducer face (14c) facing away from the process, **characterized in that** the thermoelectric transducer (14) is arranged in or on the field device (10) outside the pipeline carrying the process media, such that the heat flow in the field device (10) between the field device face (11a) facing the process and the field device face (11b, c, d) facing away from the process and/or the heat flow through the thermoelectric transducer (14) between the transducer face (14b) facing the process and the transducer face (14c) facing away from the process is converted to electrical energy by the thermoelectric transducer (14).

2. Arrangement according to Claim 1, **characterized in that** the heat flow in the field device (10) between the field device face (11a) facing the process and the field device face (11b, c, d) facing away from the process, and/or the heat flow through the thermoelectric transducer (14) between the transducer face (14b) facing the process and the transducer face (14c) facing away from the process can be converted to electrical energy irrespective of the direction of the heat flow.

3. Arrangement according to Claim 1 or 2, **characterized in that** the thermoelectric transducer (14) is connected to a heat sink (20) on the transducer face (14c) facing away from the process.

4. Arrangement according to Claim 3, **characterized in that** the thermoelectric transducer (14) is fitted entirely within the housing (11) and the heat sink (14) is fitted at least partially within the housing (11).

5. Arrangement according to Claim 3, **characterized in that** the field device (10) is equipped with an energy store (24) and an energy management system, which is integrated in the controller (22) or in the control, data acquisition and processing module (4).

6. Method for supplying electrical power to a field device (10) with a housing (11) for monitoring a technical process in a process installation, in which there are pipelines which carry process media, without the use of wires, which field device (10) has a wire-free communication interface (5), has at least one field device face (11a) facing the process and at least one field device face (11b, c, d) facing away from the process, and is equipped with a thermoelectric transducer (14) which has a transducer face (14b) facing the process and a transducer face (14c) facing away from the process, **characterized in that** the heat flow in the field device (10) between the field device face (11a) facing the process and the field device face (11b, c, d) facing away from the process and/or the heat flow through the thermoelectric transducer (14) between the transducer face (14b) facing the process and the transducer face (14c) facing away from the process is converted to electrical energy by the thermoelectric transducer (14).

7. Method according to Claim 6, **characterized in that** the heat flow in the field device (10) between the field device face (11a) facing the process and the field device face (11b, c, d) facing away from the process, and/or the heat flow through the thermoelectric transducer (14) between the transducer face (14b) facing the process and the transducer face (14c) facing away from the process is converted to electrical energy irrespective of the direction of the heat flow.

8. Method according to Claim 7, **characterized in that** a defined path for the heat flow in the field device (10) is created by means of a heat sink (20) which is fitted on the transducer face (14c) facing away from the process.

9. Method according to Claim 8, **characterized in that** the energy consumption of the field device (10) is minimized by means of an energy management system, with the energy management system being integrated in the controller (22) or in the control, data acquisition and processing module (4), and being connected via the wire-free communication interface (5) with a central control and/or service station.

10. Method according to Claim 9, **characterized in that** the energy consumption of the field device (10) is minimized as a function of the state of an energy store (24) which is arranged in the field device, and/or of the actual measurement variables and/or of their rate of change with time and/or of the instantaneous installation state, which is known to the central control and/or service station.

## Revendications

1. Dispositif destiné à alimenter sans fil en énergie électrique un appareil de terrain (10) comportant un boîtier (11) pour effectuer un contrôle de processus dans une installation de traitement dans laquelle sont présents des conduits acheminant des agents de traitement, qui est équipé d'une interface de communication sans fil (5), dans lequel l'appareil de terrain (10) comprend au moins un côté appareil de terrain (11a) orienté vers les processus et au moins un côté appareil de terrain (11b, c, d) non orienté vers les processus et d'un convertisseur thermoélectrique (14) qui comprend un côté convertisseur (14b) orienté vers les processus et un côté convertisseur (14c) non orienté vers les processus, **caractérisé en ce que** le convertisseur thermoélectrique (14) est disposé à l'extérieur du conduit d'acheminement d'agents de traitement dans ou sur l'appareil de terrain (10) de manière à ce que le flux de chaleur dans l'appareil de terrain (10) entre le côté appareil de terrain (11a) orienté vers les processus et le côté appareil de terrain (11b, c, d) non orienté vers les processus, et/ou le flux de chaleur à travers le convertisseur thermoélectrique (14) entre le côté convertisseur (14b) orienté vers les processus et le côté convertisseur (14c) non orienté vers les processus soit converti en énergie électrique par l'intermédiaire du convertisseur thermoélectrique (14).

2. Dispositif selon la revendication 1, **caractérisé en ce que** le flux de chaleur dans l'appareil de terrain (10) entre le côté appareil de terrain (11a) orienté vers les processus et le côté appareil de terrain (11b, c, d) non orienté vers les processus et/ou le flux de chaleur à travers le convertisseur thermoélectrique (14) entre le côté convertisseur (14b) orienté vers les processus et le côté convertisseur (14c) non orienté vers les processus peut être converti en énergie électrique indépendamment de la direction du flux de chaleur.

3. Dispositif selon la revendication 1 ou 2, **caractérisé en ce que** le convertisseur thermoélectrique (14) est relié à un corps de refroidissement (20) sur le côté convertisseur (14c) orienté vers les processus.

4. Dispositif selon la revendication 3, **caractérisé en ce que** le convertisseur thermoélectrique (14) est entièrement monté à l'intérieur du boîtier (11) et **en ce que** le corps de refroidissement (14) l'est au moins partiellement.

5. Dispositif selon la revendication 3, **caractérisé en ce que** l'appareil de terrain (10) est équipé d'un accumulateur d'énergie (24) et d'un système de gestion de l'énergie qui est intégré à l'unité de commande (22) ou au module de commande, d'acquisition de données et de traitement (4).

6. Procédé destiné à alimenter sans fil en énergie électrique un appareil de terrain (10) comportant un boîtier (11) pour effectuer un contrôle de processus dans une installation de traitement dans laquelle sont présents des conduits acheminant des agents de traitement, qui est équipé d'une interface de communication sans fil (5), dans lequel l'appareil de terrain (10) comprend au moins un côté appareil de terrain (11a) orienté vers les processus et au moins un côté appareil de terrain (11b, c, d) non orienté vers les processus et d'un convertisseur thermoélectrique (14) qui comprend un côté convertisseur (14b) orienté vers les processus et un côté convertisseur (14c) non orienté vers les processus, **caractérisé en ce que** le flux de chaleur dans l'appareil de terrain (10) entre le côté appareil de terrain (11a) orienté vers les processus et le côté appareil de terrain (11b, c, d) non orienté vers les processus et/ou le flux de chaleur à travers le convertisseur thermoélectrique (14) entre le côté convertisseur (14b) orienté vers les processus et le côté convertisseur (14c) non orienté vers les processus est converti en énergie électrique par l'intermédiaire du convertisseur thermoélectrique (14).

7. Procédé selon la revendication 6, **caractérisé en ce que** le flux de chaleur dans l'appareil de terrain (10) entre le côté appareil de terrain (11a) orienté vers les processus et le côté appareil de terrain (11b, c, d) non orienté vers les processus et/ou le flux de chaleur à travers le convertisseur thermoélectrique (14) entre le côté convertisseur (14b) orienté vers les processus et le côté convertisseur (14c) non orienté vers les processus est converti en énergie électrique indépendamment de la direction du flux de chaleur.

8. Procédé selon la revendication 7, **caractérisé en ce qu'**un trajet défini pour le flux de chaleur est créé dans l'appareil de terrain (10) au moyen d'un corps de refroidissement (20) monté sur le côté convertisseur (14c) non orienté vers les processus.

9. Procédé selon la revendication 8, **caractérisé en ce que** la consommation d'énergie de l'appareil de terrain (10) est minimisée au moyen d'un système de gestion de l'énergie, dans lequel le système de gestion de l'énergie est intégré à l'unité de commande (22) ou au module de commande, d'acquisition de données et de traitement (4) et est relié par l'intermédiaire de l'interface de communication sans fil (5) à une station centrale de commande et/ou de service.

10. Procédé selon la revendication 9, **caractérisé en ce que** la consommation d'énergie de l'appareil de terrain (10) est minimisée en fonction de l'état d'un accumulateur d'énergie (24) disposé dans l'appareil de terrain et/ou des grandeurs de mesure actuelles et/ou de leur vitesse de variation temporelle et/ou de l'état instantané de l'installation, connu de la station centrale de commande et/ou de service.
